# EUROPÄISCHE PATENTSCHRIFT

(11) **EP 1 273 216 B1**
(45) Veröffentlichungstag und Bekanntmachung des Hinweises auf die Patenterteilung: **07.11.2007**
(21) Anmeldenummer: 02013860.8
(22) Anmeldetag: 22.06.2002
(51) Int. Cl.: A01B 63/14, A01B 51/04

(54) **Bodenbearbeitungsgerät**
Soil-working implement
Outil pour le travail du sol

(30) Priorität: 05.07.2001 DE 10132628; 13.09.2001 DE 10145112
(43) Veröffentlichungstag der Anmeldung: 08.01.2003
(73) Patentinhaber: Amazonen-Werke H. Dreyer GmbH & Co. KG, 49205 Hasbergen (DE)
(72) Erfinder: Scheufler, Bernd, Dr., 49205 Hasbergen (DE); Pokriefke, Michael, 04229 Leipzig (DE)

(56) Entgegenhaltungen:
- EP-A- 0 171 719
- EP-A- 0 749 677
- WO-A-92/02690
- DE-A- 19 844 395
- DE-B- 1 016 044
- US-A- 4 396 069
- US-A- 6 070 673
- US-A- 6 076 611

## Beschreibung

Die Erfindung betrifft ein Bodenbearbeitungsgerät gemäß des Oberbegriffes des Patentanspruches 1.

Ein derartiges Bodenbearbeitungsgerät ist bereits bekannt. Dieses Bodenbearbeitungsgerät weist einen zentralen Geräterahmen auf, der an seiner Vorderseite und seiner Rückseite auf dem Boden abrollende Tiefenführungselemente, die als Laufräder oder Walzen ausgebildet sind, aufweist. Diese Laufräder oder Walzen sind mittels einer Einstelleinrichtung gegenüber dem Rahmen in der Höhe verstellbar. An dem Geräterahmen sind Bodenbearbeitungswerkzeuge angeordnet. Diese Bodenbearbeitungswerkzeuge können durch die Verstellung der Abstützelemente gegenüber dem Geräterahmen in ihrer Eindringtiefe in den Boden eingestellt werden. Auf relativ ebenen Flächen, die keine Kuppen oder Senken aufweisen, wird eine ausreichend gleichmäßige Tiefenführung bzw. Arbeitstiefe der Bodenbearbeitungswerkzeuge im Boden erreicht. Insbesondere, wenn die vorderen und hinteren Abstützelemente einen relativ großen Abstand, beispielsweise von mehr als 3 bis 4 m zueinander aufweisen, kann bei dem Einsatz auf Flächen, die Kuppen und Senken aufweisen, die Arbeitstiefe sehr ungleichmäßig sein.

Der Erfindung liegt die Aufgabe zugrunde, eine gleichmäßige Arbeitstiefe der Bodenbearbeitungswerkzeuge sowohl bei dem Überfahren einer Kuppe wie bei dem Durchfahren einer Senke zu erreichen.

Diese Aufgabe wird erfindungsgemäß durch die kennzeichnenden Merkmale des Anspruches 1 gelöst. Aufgrund der verstellbaren Anordnung der Bodenbearbeitungswerkzeuge gegenüber dem Geräterahmen sind sie gegenüber den Laufrädern bzw. den Walzen, auf die sich der Geräterahmen während der Arbeit auf dem Boden abstützt, während des Arbeitsvorganges verstellbar und können so bei dem Durchfahren einer Senke abgesenkt und bei dem Überfahren einer Kuppe angehoben werden. Auch eine automatische Tiefeneinstellung der Bodenbearbeitungswerkzeuge und so eine automatische Einhaltung der gewünschten Eingriffstiefe der Werkzeuge im Boden erreicht. Weiterhin wird eine Abarbeitung einer eingespeicherten Kontur des Feldes in einfacher Weise sichergestellt. Aufgrund der vorstehenden Maßnahmen kann in einem Speichermedium die Kontur der Fläche koordinatenspezifisch, beispielsweise auf GPS oder DGPS gestützt, abgespeichert werden. Diese unterschiedlichen Arbeitstiefen werden dann ortspezifisch von dem Ortungssystem abgerufen, und dann die Einstellmittel entsprechend angesteuert, so dass die gewünschte Arbeitstiefe eingestellt wird. Hierbei überprüft dann der Sensor in Echtzeit, ob die von dem abgespeicherten System an die Einstellmittel übermittelten Daten tatsächlich die vorgesehene Arbeitstiefe einstellen und die gewünschte Arbeitstiefe eingehalten wird.

Um diese Einstellung in vorteilhafter Weise zu verwirklichen, ist vorgesehen, dass die Bodenbearbeitungswerkzeuge an einem Zwischenrahmen angeordnet sind, dass der Zwischenrahmen mit den Bodenbearbeitungswerkzeugen gegenüber dem Geräterahmen in aufrechter Richtung verstellbar angeordnet ist, dass zwischen dem Geräterahmen und dem Zwischenrahmen Einstellmittel zur Verstellung des Zwischenrahmens gegenüber dem Geräterahmen angeordnet sind.

Eine einfache Anordnung des Sensors wird dadurch erreicht, dass der Sensor an dem Zwischenrahmen angeordnet ist.

Um das Bodenbearbeitungsgerät hinsichtlich seiner Arbeitsqualität zu verbessern, sind die Merkmale des Patentanspruches 6 vorgesehen. In Folge dieser Maßnahmen können erforderlichenfalls die abgespeicherten Daten bzgl. der Tiefenführung mittels eines manuellen Eingriffes übersteuert werden, falls dies die Einsatzbedingungen und die eventuell geänderten Bodenverhältnissen erfordern. Des weiteren ist es möglich, fehlerhaft abgespeicherte Daten zu übersteuern und somit die Arbeitstiefe zu korrigieren, damit eine optimale und an die tatsächlichen Bedingungen angepasste Bodenbearbeitung erfolgen kann. Auch ist es möglich, das manuelle Übersteuern abzuspeichern bzw. die abgespeicherten Daten automatisch zu korrigieren, um so für weitere Arbeitsgänge im gleichen oder den folgenden Jahr mit optimierten Daten die Bearbeitung durchzuführen.

Um eine möglichst optimale Anpassung der Arbeitstiefe an die gegebenen Verhältnisse zu ermöglichen, ist vorgesehen, dass die Bodenbearbeitungswerkzeuge in Teilarbeitsbreitenbereiche aufgeteilt sind, dass die Arbeitstiefe der Bodenbearbeitungswerkzeuge bereichsweise mittels der zugeordneten Einstellmittel veränderbar ist.

Die sektionsweise Verstellung lässt sich durch die Merkmale das Patentanspruches 8 in einfacher Weise verwirklichen.

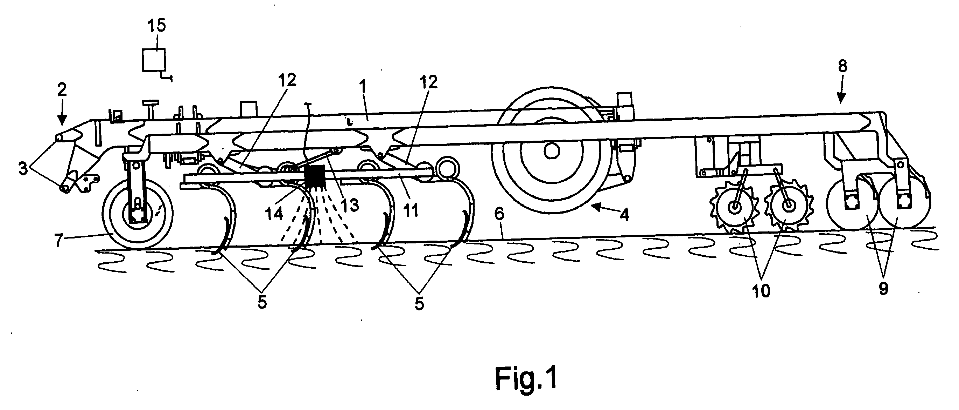

Weitere Einzelheiten der Erfindung sind der Beispielsbeschreibung und den Zeichnungen zu entnehmen. Hierbei zeigen
- Fig. 1: ein Bodenbearbeitungsgerät in Seitenansicht, in Prinzipdarstellung, bei dem Bearbeiten einer ebenen Fläche,
- Fig. 2: die Einstellung der Bodenbearbeitungswerkzeuge, wobei das Bodenbearbeitungsgerät eine Senke durchfährt,
- Fig. 3: die Einstellung der Bodenbearbeitungswerkzeuge, wenn das Bodenbearbeitungsgerät eine Kuppe überfährt und
- Fig. 4: ein Bodenbearbeitungsgerät in Seitenansicht, in Prinzipdarstellung, bei dem Bearbeiten einer ebenen Fläche.

Das Bodenbearbeitungsgerät weist den zentralen Geräterahmen 1 auf, der an seiner Vorderseite 2 über Kupplungselemente 3, beispielsweise einer Deichsel oder Dreipunktkupplungselemente, an einen Ackerschlepper ankuppelbar ist. Des weiteren ist an dem Geräterahmen 1 ein Fahrwerk 4 angeordnet, welches bei der Arbeit angehoben wird und zum Transport abgesenkt werden kann, so dass die Bodenbearbeitungswerkzeuge 5 aus dem Boden 6 gehoben werden. Auf der Vorderseite 2 des Geräterahmens 1 sind die vorderen Abstützelemente 7, in Form von Laufrädern bzw. Walzen angeordnet. Diese Abstützelemente 7 sind gegenüber dem Geräterahmen 1 mittels einer nicht dargestellten Einstelleinrichtung in der Höhe verstellbar, so dass eine Grundarbeitstiefe der Bodenbearbeitungswerkzeuge 5, die weiter unten erläutert sind, eingestellt werden kann.

Auf der Rückseite 8 des Geräterahmens 1 sind die hinteren Abstützelemente 9, die als Laufräder oder Walzen ausgebildet sind, angeordnet. Diese Abstützelemente 9 sind ebenfalls über Einstellmittel gegenüber dem Geräterahmen in der Höhe einstellbar, so dass eine Grundeingriffstiefe der Bodenbearbeitungswerkzeuge 5 einstellbar ist. Vor den hinteren Abstützelementen 9 sind Egalisierungselemente 10 in Form von Scheiben angeordnet. Es können auch Egalisierungselemente in Form von Zinken oder Planierschienen vorgesehen sein.

Zwischen den vorderen und hinteren Abstützelementen 7 und 9, vorzugsweise vor dem Fahrwerk 3, ist ein Zwischenrahmen 11 angeordnet. An diesem Zwischenrahmen 11 sind die als Grubberzinken ausgebildeten Bodenbearbeitungswerkzeuge 5 angeordnet. Der Zwischenrahmen 11 ist an dem Geräterahmen 1 über die Parallelogrammaufhängung 12 höhenbewegbar und höhenverstellbar angeordnet. Anstelle der Parallelogrammführung 12 kann auch eine als Schieberführung ausgebildete Aufhängungsvorrichtung vorgesehen sein. Zwischen dem Geräterahmen 1 und dem Zwischenrahmen 11 sind die Einstellmittel 13 angeordnet, mittels welcher der Zwischenrahmen 11 gegenüber dem Geräterahmen 1 in der Höhe verstellbar ist. Während der Bestellarbeit wird das Fahrwerk 4 in die dargestellte Position gebracht und somit vom Boden 6 abgehoben, d.h. dass die vorderen und hinteren Abstützelemente 7 und 9 das Bodenbearbeitungsgerät auf den Boden 6 abstützen. Hierbei rollen die Abstützelemente 7 und 9 auf den Boden 6 ab und führen somit die Bobenbearbeitungszinken 5 bodenkonturabhängig in ihrer Eingriffstiefe in den Boden 6.

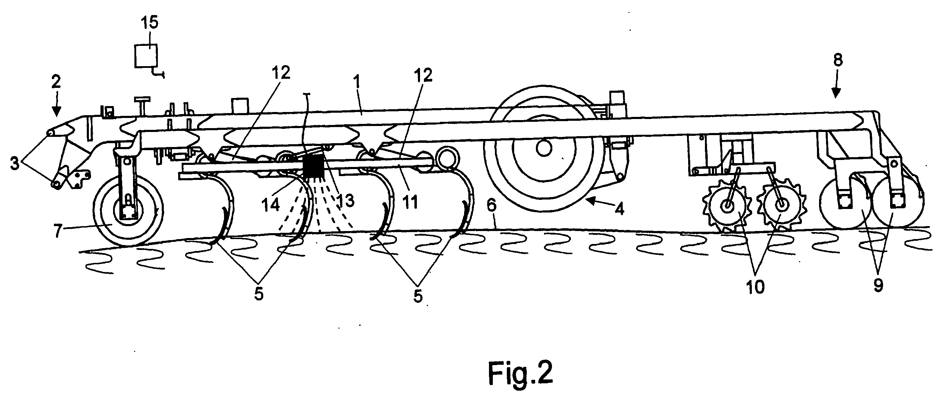

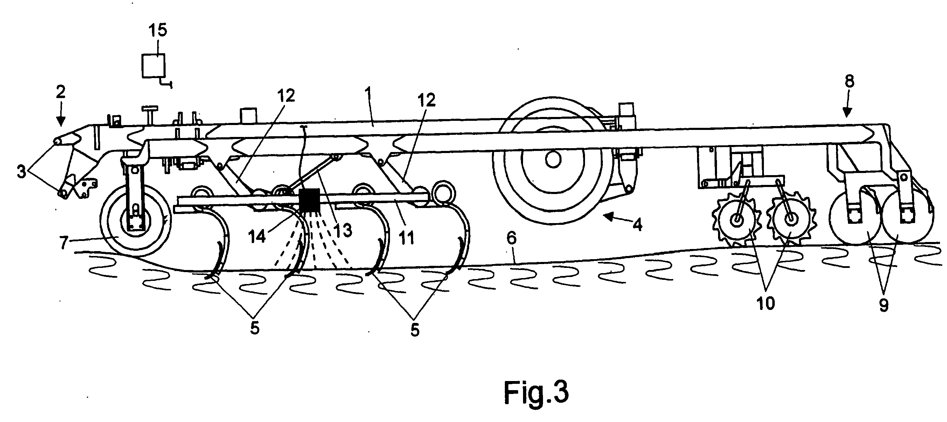

Die vorderen und hinteren Abstützelemente 7 und 9 sind in einem großen Abstand, von mehr als 4 m zueinander angeordnet. Wie insbesondere den Fig.2 und 3 entnehmbar ist, verändert sich die Eingriffstiefe der Bodenbearbeitungswerkzeuge 5, die als Zinken ausgebildet sind, bei dem Durchfahren von Senken (vgl. Fig.2) und bei dem Überfahren von Kuppen (vgl. Fig.3).

Um dennoch eine gleichmäßige Eingriffstiefe in zulässigen Toleranzen zu gewährleisten, wird bei dem Durchfahren von Senken (vgl. Fig.2) der Zwischenrahmen 11 mit den Grubberzinken 5 mittels der Einstelleinrichtung 13 und der Parallelogrammführung 12 angehoben.

Bei dem Überfahren von Kuppen, wird der Zwischenrahmen 11 mit den Grubberzinken 5 mittels der Einstelleinrichtung 13 und der Parallelogrammführung 12 abgesenkt (vgl. Fig.3).

An dem Zwischenrahmen 11 ist zumindest ein Sensor 14 angeordnet, der den Abstand zur Bodenoberfläche 5 im Bereich des Zwischenrahmens 11 bzw. der Bodenbearbeitungswerkzeuge 5 abtastet. Durch die Messung dieses Abstandes kann die gewünschte Eingriffstiefe der Bodenbearbeitungswerkzeuge 5 in den Boden 6 ermittelt werden. Der Sensor 14 ist mit einer Steuerungs- und Regelungseinrichtung 15 verbunden. In dieser Steuerungs- und Regelungseinrichtung 15 lässt sich über eine geeignete Eingabeeinrichtung die gewünschte Eingriffstiefe der Bodenbearbeitungswerkzeuge 5 in den Boden 6 eingeben. Aufgrund dieser vorgegebenen Sollwerte und der von dem Sensor 14 übermittelten Daten steuert die Steuerungs- und Regelungseinrichtung 15 die Einstellmittel 13, die auf die Parallelogrammführung 12 und somit auf dem Zwischenrahmen 11 einwirken, an und heben den Zwischenrahmen 11 mit den Werkzeugen 5 an oder senken ihn ab, um so jeweils die gewünschte Eingriffstiefe der Werkzeuge 5 in den Boden 6 sicherzustellen.

Somit wird also beim Durchfahren einer Senke die sich sonst verringernde Arbeitstiefe nachgestellt, d.h. der Zwischenrahmen 11 mit den Werkzeugen 5 wird abgesenkt (vgl. Fig. 3), während bei dem Überfahren einer Kuppe die an sich zu groß werdende Arbeitstiefe dadurch eingehalten wird, indem der Zwischenrahmen 11 mit den Bodenbearbeitungswerkzeugen 5 angehoben wird (vgl. Fig. 2).

In der Steuerungs- und Regelungseinrichtung 15 kann eine ortspezifische Geländekontur, gestützt auf GPS-Signalen abgespeichert sein. Hierbei kann die Steuerung so ausgelegt sein, dass zunächst auf die abgespeicherten Daten zurückgegriffen wird und die Einstellmittel 13 ortspezifisch entsprechend den abgespeicherten Daten angesteuert werden, wobei der Sensor 14 überprüft, ob die vorgegebene Tiefe eingehalten wird. Falls der Sensor 14 feststellt, dass die Eingriffstiefe der Werkzeuge 5 in dem Boden 6 nicht mit den vorgegebenen Werten übereinstimmt, so werden anhand der von dem Sensor 14 übermittelten Daten über die Steuerungseinrichtung 14 die Einstellmittel 13 angesteuert, so dass die gewünschte Arbeitstiefe der Werkzeuge 5 eingestellt wird.

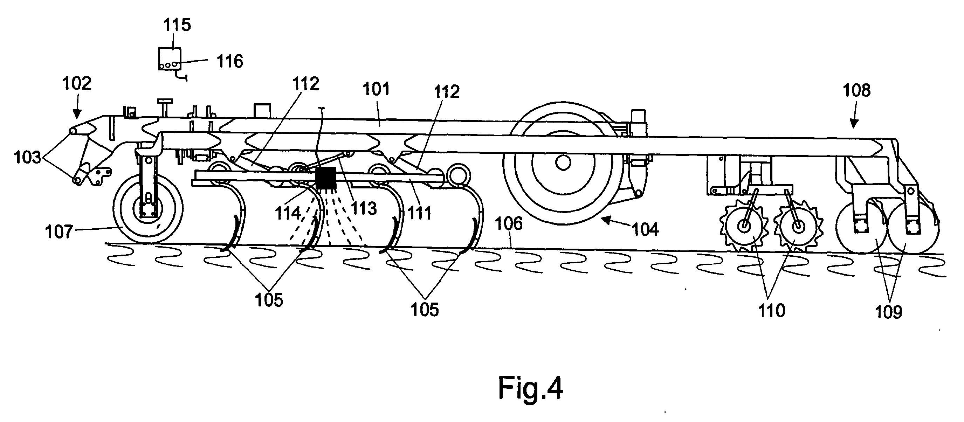

Das Bodenbearbeitungsgerät gemäß Fig. 4 weist den zentralen Geräterahmen 101 auf, der an seiner Vorderseite 102 über Kupplungselemente 103, beispielsweise einer Deichsel oder Dreipunktkupplungselemente, an einen Ackerschlepper ankuppelbar ist. Des weiteren ist an dem Geräterahmen 101 ein Fahrwerk 104 angeordnet, welches bei der Arbeit angehoben wird und zum Transport abgesenkt werden kann, so dass die Bodenbearbeitungswerkzeuge 105 aus dem Boden 106 gehoben werden. Auf der Vorderseite 102 des Geräterahmens 101 sind die vorderen Abstützelemente 107, in Form von Laufrädern bzw. Walzen angeordnet. Diese Abstützelemente 107 sind gegenüber dem Geräterahmen 101 mittels einer nicht dargestellten Einstelleinrichtung in der Höhe verstellbar, so dass eine Grundarbeitstiefe der Bodenbearbeitungswerkzeuge 105, die weiter unten erläutert sind, eingestellt werden kann.

Auf der Rückseite 108 des Geräterahmens 101 sind die hinteren Abstützelemente 109, die als Laufräder oder Walzen ausgebildet sind, angeordnet. Diese Abstützelemente 109 sind ebenfalls über Einstellmittel gegenüber dem Geräterahmen in der Höhe einstellbar, so dass eine Grundeingriffstiefe der Bodenbearbeitungswerkzeuge 105 einstellbar ist. Vor den hinteren Abstützelementen 109 sind Egalisierungselemente 110 in Form von Scheiben angeordnet. Es können auch Egalisierungselemente in Form von Zinken oder Planierschienen vorgesehen sein.

Zwischen den vorderen und hinteren Abstützelementen 107 und 109, vorzugsweise vor dem Fahrwerk 104, ist ein Zwischenrahmen 111 angeordnet. An diesem Zwischenrahmen 111 sind die als Grubberzinken ausgebildeten Bodenbearbeitungswerkzeuge 105 angeordnet. Der Zwischenrahmen 111 ist an dem Geräterahmen 101 über die Parallelogrammaufhängung 112 höhenbewegbar und höhenverstellbar angeordnet: Anstelle der Parallelogrammführung 112 kann auch eine als Schieberführung ausgebildete Aufhängungsvorrichtung vorgesehen sein. Zwischen dem Geräterahmen 101 und dem Zwischenrahmen 111 sind die Einstellmittel 113 angeordnet, mittels welcher der Zwischenrahmen 111 gegenüber dem Geräterahmen 101 in der Höhe verstellbar ist. Während der Bestellarbeit wird das Fahrwerk 104 in die dargestellte Position gebracht und somit vom Boden 106 abgehoben, d.h. dass die vorderen und hinteren Abstützelemente 107 und 109 das Bodenbearbeitungsgerät auf den Boden 106 abstützen. Hierbei rollen die Abstützelemente 107 und 108 auf den Boden 106 ab und führen somit die Bobenbearbeitungszinken 105 bodenkonturabhängig in ihrer Eingriffstiefe in den Boden 106.

Die vorderen und hinteren Abstützelemente 107 und 109 sind in einem großen Abstand, von mehr als 4 m zueinander angeordnet.

An dem Zwischenrahmen 111 ist zumindest ein Sensor 114 angeordnet, der den Abstand zur Bodenoberfläche 106 im Bereich des Zwischenrahmens 111 bzw. der Bodenbearbeitungswerkzeuge 105 abtastet. Durch die Messung dieses Abstandes kann die gewünschte Eingriffstiefe der Bodenbearbeitungswerkzeuge 105 in den Boden 106 ermittelt werden. Der Sensor 114 ist mit einer als Bordcomputer ausgebildeten Steuerungs- und Regelungseinrichtung 115 verbunden. In dieser Steuerungs- und Regelungseinrichtung 115 lässt sich über eine geeignete Eingabeeinrichtung die gewünschte Eingriffstiefe der Bodenbearbeitungswerkzeuge 105 in den Boden 106 standortspezifisch eingeben. Aufgrund dieser vorgegebenen Sollwerte und der von dem Sensor 114 übermittelten Daten steuert die Steuerungs- und Regelungseinrichtung 115 die Einstellmittel 113, die auf die Parallelogrammführung 112 und somit auf dem Zwischenrahmen 111 einwirken, an und heben den Zwischenrahmen 111 mit den Werkzeugen 105 an oder senken ihn ab, um so jeweils die gewünschte Eingriffstiefe der Werkzeuge 105 in den Boden 106 sicherzustellen.

In der Steuerungs- und Regelungseinrichtung 115 ist eine ortspezifische Geländekontur, gestützt auf GPS-Signalen abgespeichert. Hierbei ist die Steuerung und/oder Regelung so ausgelegt, dass zunächst auf die abgespeicherten Daten zurückgegriffen wird und die Einstellmittel 113 ortspezifisch entsprechend den abgespeicherten Daten angesteuert werden, wobei der Sensor 114 überprüft, ob die vorgegebene Tiefe eingehalten wird. Falls der Sensor 114 feststellt, dass die Eingriffstiefe der Werkzeuge 105 in dem Boden 106 nicht mit den vorgegebenen Werten übereinstimmt, so werden anhand der von dem Sensor 114 übermittelten Daten über die Steuerungseinrichtung 114 die Einstellmittel 113 angesteuert, so dass die gewünschte Arbeitstiefe der Werkzeuge 105 eingestellt wird.

Der Bordcomputer 115 weist zumindest eine oder mehrere Betätigungstasten oder -felder 116 auf, über welche aufgrund eines in dem Bordcomputer 115 abgespeicherten Programms die in dem Bordcomputer 115 abgespeicherten Daten übersteuer- und/oder überregelbar sind, so dass aufgrund des manuellen Eingriffes die aufgrund der abgespeicherten Daten eingestellte Arbeitstiefe oder aufgrund der von dem Sensor 114 ermittelten Eindringtiefe veränderbar und/oder übersteuerbar ist.

Die Bodenbearbeitungswerkzeuge 105 sind in Teilarbeitsbreitenbereiche aufgeteilt. Hierzu sind mehrere Zwischenrahmen 111 nebeneinander angeordnet. Jeder Zwischenrahmen 111 ist über eine Parallelogrammführung 112 am Rahmen 101 aufgehängt. Zwischen jedem Zwischenrahmen 111 und dem Rahmen 101 sind entsprechende Einstellmittel 113 angeordnet. Diese Einstellmittel 113 sind jeweils gemeinsam oder getrennt von dem Bordcomputer 115 ansteuerbar. Somit ist die Arbeitstiefe der Bodenbearbeitungswerkzeuge 105 bereichsweise mittels der zugeordneten Einstellmittel 113 über den Bordcomputer 115 veränderbar.

## Patentansprüche

1. Bodenbearbeitungsgerät mit einem Geräterahmen (1), der sich mittels vorderer und hinterer auf dem Boden abrollender und in Fahrtrichtung gesehen beabstandet zueinander angeordneter Laufräder und/oder Walzen abstützt und die an dem Geräterahmen (1) angeordneten Bodenbearbeitungswerkzeuge (5) in ihrer Arbeitstiefe in den Boden führen, wobei die Bodenbearbeitungswerkzeuge (5) gegenüber dem Geräterahmen (1) in aufrechter Richtung verstellbar angeordnet sind, wobei die Bodenbearbeitungswerkzeuge zur (5) Einstellung ihrer Eingriffstiefe in den Boden mittels von einer Steuereinrichtung (15) ansteuerbarer Einstellmittel (13) verstellbar sind, **dadurch gekennzeichnet, dass** den Bodenbearbeitungswerkzeugen (5) ein Sensor (14) zur Messung der Eindringtiefe der Werkzeuge (5) in den Boden zugeordnet ist, dass der Sensor (14) Signale an eine Steuereinrichtung (15), die Einstellmittel (13) ansteuert, übermittelt, dass aufgrund dieser Signale die Einstellmittel (13) derart angesteuert werden, dass die eingestellte Eindringtiefe der Werkzeuge (5) in den Boden erhalten bleibt, dass zusätzlich die Eindringtiefe ortspezifisch aufgrund von in der Steuereinrichtung (15) abgespeicherter Daten mit Hilfe von GPS-Signalen in Anpassung an die Bodenverhältnisse veränderbar ist.

2. Bodenbearbeitungsgerät nach Anspruch 1, **dadurch gekennzeichnet, dass** die Bodenbearbeitungswerkzeuge (5) an einem Zwischenrahmen (11) angeordnet sind, dass der zwischenrahmen (11) mit den Bodenbearbeitungswerkzeugens (5) gegenüber dem Geräterahmen (1) in aufrechter Richtung verstellbar angeordnet ist, dass zwischen dem Geräterahmen (1) und dem Zwischenrahmen (11) Einstellmittel (13) zum Verstellung des Zwischenrahmens (11) gegenüber dem Geräterahmen (1) angeordnet sind.

3. Bodenbearbeitungsgerät nach den Anspruch 2, **dadurch gekennzeichnet, dass** der Sensor (14) an dem Zwischenrahmen (11) angeordnet ist.

4. Bodenbearbeitungsgerät nach einem oder mehreren der vorstehenden Ansprüche, **dadurch gekennzeichnet, dass** die Bodenkontur in einer Karte ortspezifisch abgespeichert ist, und dass aufgrund der abgespeicherten Daten die Eindringtiefe der Werkzeuge (5) in den Boden einstellbar ist.

5. Bodenbearbeitungsgerät nach einem oder mehreren der vorstehenden Ansprüche, **dadurch gekennzeichnet, dass** mittels des Sensors (14) die Eindringtiefe der Bodenbearbeitungswerkzeuge (5) in den Boden ermittelbar und bei Abweichungen von der gewünschten Eindringtiefe der Zwischenrahmen (11) mit den Werkzeugen (5) über die Einstell- und Regeleinrichtung (15) mittels der Einstellmittel (13) entsprechend eingestellt wird.

6. Bodenbearbeitungsgerät nach Anspruch 1 **dadurch gekennzeichnet, dass** in der elektronischen Steuer und/oder Regeleinrichtung (115)eine Feldkarte mit ortsspezifischen Angaben zur Eindringtiefe der Bodenbearbeitungswerkzeuge (105) im Boden (106) abgespeichert ist, dass aufgrund der abgespeicherten Daten die Einstellmittel (113) zwecks Einstellung der Eindringtiefe ortsspezifisch angesteuert werden, dass die Bedieneinheit der elektronischen Steuer- und Regeleinrichtung (115) zumindest ein manuell betätigbares Element (116) aufweist, mittels welchem die abgespeicherten Daten übersteuer- und/oder überregelbar sind, so dass aufgrund des manuellen Eingriffes die aufgrund der abgespeicherten Daten eingestellte Arbeitstiefe der Bodenbearbeitungswerkzeuge (105) veränderbar und/oder übersteuerbar ist.

7. Bodenbearbeitungsgerät nach Anspruch 6, **dadurch gekennzeichnet, dass** die Bodenbearbeitungswerkzeuge (105) in Teilarbeitsbreitenbereiche aufgeteilt sind, dass die Arbeitstiefe der Bodenbearbeitungswerkzeuge (105) bereichsweise mittels der zugeordneten Einstellmittel (113) veränderbar ist.

8. Bodenbearbeitungsgerät nach Anspruch 7, wobei die Bodenbearbeitungswerkzeuge (105) an Zwischenrahmen (111) angeordnet sind, dass die Zwischenrahmen (111) mit den Bodenbearbeitungswerkzeugen (105) gegenüber dem Geräterahmen (101) in aufrechter Richtung verstellbar angeordnet ist, wobei zwischen dem Geräterahmen (101) und den Zwischenrahmen (111) Einstellmittel (113) zur Verstellung des jeweiligen Zwischenrahmens (111) gegenüber dem Geräterahmen (101) angeordnet sind, **dadurch gekennzeichnet, dass** jedem Teilarbeitsbreitenbereich ein Zwischenrahmen (111) zugeordnet ist, das die Zwischenrahmen (111) unabhängig voneinander oder gemeinsam mittels der zugeordneten Einstellmittel (113) verstellbar sind.

## Claims

1. Ground cultivating device with a device frame (1), which is supported by means of front and rear running wheels and/or rollers, which roll on the ground, are disposed at a spacing one from another when viewed in the direction of travel and guide the ground cultivating tools (5) that are disposed on the device frame (1) into the ground at their working depth, wherein the ground cultivating tools (5) are disposed so as to be adjustable in the upward direction relative to the device frame (1), wherein, to adjust their depth of penetration into the ground, the ground cultivating tools (5) are adjustable by means of an adjusting means that is controllable by a control device, **characterised in that** a sensor (14) for measuring the depth of penetration of the tools (5) into the ground is associated with the ground cultivating tools (5), **in that** the sensor (14) transmits signals to a control device (15), which actuates adjusting means (13), **in that** in response to the said signals the adjusting means (13) are actuated in such a manner that the adjusted depth of penetration of the tools (5) into the ground remains the same, **in that**, in addition, in response to data stored in the control device (15), the depth of penetration is modifiable specific to the location with the assistance of GPS signals so as to be adaptable to the ground conditions.

2. Ground cultivating device according to claim 1, **characterised in that** the ground cultivating tools (5) are disposed on an intermediate frame (11), **in that** the intermediate frame (10) is disposed with the ground cultivating tools (5) so as to be adjustable in the upward direction relative to the device frame (1), **in that** adjusting means (13) for adjusting the intermediate frame (11) relative to the device frame (1) are disposed between the device frame (1) and the intermediate frame (10).

3. Ground cultivating device according to claim 2, **characterised in that** the sensor (14) is disposed at the intermediate frame (11).

4. Ground cultivating device according to one or more of the preceding claims, **characterised in that** the contour of the ground is stored in a map specific to the location, and **in that** the depth of penetration of the tools (5) into the ground is adjustable on account of the stored data.

5. Ground cultivating device according to one or more of the preceding claims, **characterised in that** the depth of penetration of the ground cultivating tools (5) into the ground is determinable by means of the sensor (14) and where there are deviations from the desired depth of penetration, the intermediate frame (11) with the tools (5) is adjusted via the adjusting and controlling device by means of the adjusting means (13).

6. Ground cultivating device according to claim 1, **characterised in that** a field map with location specific specifications as to the depth of penetration of the ground cultivating tools (105) into the ground is stored in the electronic control and/or regulating device (115), **in that**, in response to the stored data, the adjusting means (113) are actuated specific to the location for the purposes of adjusting the depth of penetration, **in that** the control unit of the electronic control and regulating device (115) includes at least one manually actuatable element (116), by means of which the stored data can be overdriven and/or overregulated such that on account of the manual intervention the working depth of the ground cultivating tool (105), set on account of the stored data, is modifiable and/or can be overdriven.

7. Ground cultivating device according to claim 6, **characterised in that** the ground cultivating tools (105) are divided into part operating width regions, **in that** the operating depth of the ground cultivating tools (105) is modifiable in a regional manner by means of the associated adjusting means (113).

8. Ground cultivating device according to claim 7, wherein the ground cultivating tools (105) are disposed on intermediate frames (111), in that the intermediate frame (111) with the ground cultivating tools (105) is disposed so as to be adjustable in the upward direction relative to the device frame (101), wherein adjusting means (111) are disposed between the device frame (101) and the intermediate frames (111) for adjusting the respective intermediate frame (111) relative to the device frame (101), **characterised in that** an intermediate frame (111) is associated with each part operating width region and **in that** the intermediate frames (111) are adjustable independent of one another or together by means of the associated adjusting means (113).

## Revendications

1. Machine pour le travail du sol, comportant un châssis supporté par des roues et/ou des rouleaux de sustentation, avant et arrière, roulant sur le sol et écartés dans la direction de circulation, pour guider les outils de travail (5) portés par le châssis (1) dans leur profondeur de travail dans le sol,
les outils de travail (5) étant réglables en direction verticale par rapport au châssis (1),
les outils de travail (5) étant réglables en profondeur de pénétration dans le sol à l'aide de moyens de réglage (13) commandés par une installation de commande (15),
**caractérisée en ce qu'**
un capteur (14) mesurant la profondeur des outils (5) dans le sol est associé aux outils (5) de travail,
le capteur (14) transmet des signaux à une installation de commande (15) commandant les moyens de réglage (13),
à partir de ces signaux, les moyens de réglage (13) sont commandés pour maintenir constante la profondeur de pénétration des outils (5) dans le sol, et de plus on modifie la profondeur de pénétration de manière spécifique en fonction de l'emplacement à l'aide de données en mémoire dans l'installation de commande (15) et de signaux GPS pour s'adapter aux conditions du sol.

2. Machine pour le travail du sol selon la revendication 1,
**caractérisée en ce que**
les outils de travail (5) sont installés sur un châssis intermédiaire (11),
le châssis intermédiaire (11) portant les outils de travail (5) est réglable en direction verticale par rapport au châssis (1) de la machine,
des moyens de réglage (13) sont prévus entre le châssis (1) de la machine et le châssis intermédiaire (11) pour régler le châssis intermédiaire (11) par rapport au châssis (1) de la machine.

3. Machine pour le travail du sol selon la revendication 2,
**caractérisée en ce que**
le capteur (14) est installé sur le châssis intermédiaire (11).

4. Machine pour le travail du sol selon l'une ou plusieurs des revendications précédentes,
**caractérisée en ce que**
le contour du sol est mémorisé dans une carte de manière spécifique en fonction du lieu et selon les données mémorisées on règle la profondeur de pénétration des outils (5) dans le sol.

5. Machine pour le travail du sol selon l'une ou plusieurs des revendications précédentes,
**caractérisée en ce qu'**
à l'aide du capteur (14) on détermine la profondeur de pénétration des outils de travail (5) dans le sol et en cas de différence entre la profondeur de pénétration souhaitée on règle de façon correspondante le châssis intermédiaire (11) avec les outils (5) par l'installation de réglage et de régulation (15) à l'aide des moyens de réglage (13).

6. Machine pour le travail du sol selon la revendication 1,
**caractérisée en ce que**
l'installation de commande et/ou de régulation (115), électronique, comporte une carte du champ avec des indications spécifiques à chaque lieu pour la profondeur de pénétration des outils de travail (105) dans le sol (106),
et à partir des données enregistrées en mémoire, les moyens de réglage (113) règlent la profondeur de pénétration de manière spécifique selon l'emplacement,
l'unité de manoeuvre de l'installation de commande et de régulation électronique (115) comportant au moins un élément d'actionnement manuel (116) à l'aide duquel on peut remplacer les données mémorisées en prenant la commande et/ ou la régulation, de façon que l'intervention manuelle modifie et/ou prenne la commande par rapport à la profondeur de travail des outils de travail (105), profondeur réglée à partir des données mémorisées.

7. Machine pour le travail du sol selon la revendication 6,
**caractérisée en ce que**
les outils de travail (105) sont répartis en zones partielles de travail,
la profondeur de travail des outils (105) est variable à l'aide de moyens de réglage (113) associés à chaque zone.

8. Machine pour le travail du sol selon la revendication 7,
**caractérisée en ce que**
les outils de travail (105) sont portés par un châssis intermédiaire (111), le châssis intermédiaire (111) est réglable en direction verticale avec ses outils de travail (105) par rapport au châssis (101) de la machine,
entre le châssis (101) de la machine et le châssis intermédiaire (111) il y a des moyens de réglage (113) pour régler le châssis intermédiaire (111) respectif par rapport au châssis (101) de la machine,
**caractérisée en ce qu'**
à chaque partie de zone de travail est associé un châssis intermédiaire (111) et les châssis intermédiaires (111) sont réglables indépendamment les uns des autres ou en commun à l'aide des moyens de réglage (113).
